# EUROPÄISCHE PATENTSCHRIFT

(11) **EP 0 867 411 B1**
(45) Veröffentlichungstag und Bekanntmachung des Hinweises auf die Patenterteilung: **30.01.2002**
(21) Anmeldenummer: 98104875.4
(22) Anmeldetag: 18.03.1998
(51) Int. Cl.: C03B 17/04, C03B 13/14, C03B 13/16

(54) **Verfahren und Vorrichtung zur Heissformgebung von Präzisionsstrukturen in Flachglas**
Process and apparatus for hot-forming precision-structures in sheet glass
Procédé et dispositif pour le moulage à chaud de structures de précision dans le verre plat

(30) Priorität: 29.03.1997 DE 19713309
(43) Veröffentlichungstag der Anmeldung: 30.09.1998
(73) Patentinhaber: Schott Glas, 55122 Mainz (DE); CARL-ZEISS-STIFTUNG trading as Schott Glas, 55122 Mainz (DE)
(72) Erfinder: Ostendarp, Heinrich, Dr., 55128 Mainz (DE); Paasch, Marita, Dr., 55124 Mainz (DE)
(74) Vertreter: Fuchs Mehler Weiss & Fritzsche

(56) Entgegenhaltungen:
- EP-A- 0 493 202
- DE-A- 3 114 881
- DE-A- 3 808 380
- FR-A- 904 468
- FR-A- 2 741 335
- US-A- 1 261 939

## Beschreibung

Die Erfindung betrifft ein Verfahren zur Heißformgebung von Präzisionsstrukturen in Flachglas, bei dem ein erwärmtes Formgebungswerkzeug mit einer strukturgebenden Oberfläche auf einer Seite des Flachglases in das Glasmaterial gedrückt wird.

Die Erfindung bezieht sich auch auf eine Vorrichtung zur Durchführung eines derartigen Verfahrens.

Mit Präzisionsstrukturen versehenes Flachglas wird für Präzisionsanwendungen, insbesondere im Bereich der Gläser mit optischen Funktionen, benötigt. Derartige Gläser sind beispielsweise Displayscheiben von neueren Flachbildschirmgenerationen (Plasma Display Panel = PDP; Plasma Addressed Liquid Crystal = PALC). In diese Flachbildschirmgläser werden Mikrokanalstrukturen für die Ansteuerung einzelner Zeilen oder Spalten eingebracht, die sich über die gesamte aktive Bildschirmbreite oder -höhe erstrecken und in denen über eine elektrische Entladung Plasma gezündet wird. Die beidseitige Begrenzung eines einzelnen Kanals wird über rechteckige Stege realisiert, deren Breite möglichst gering (<100 µm) ist. Um ein ausreichendes Entladungsvolumen zu erhalten, ist die Höhe der Stege wesentlich größer als deren Breite. Der Abstand der Stege sollte möglichst gering sein. Derzeit werden in Kleinserien typische Werte zwischen 360 µm und 640 µm erreicht.

Dabei beträgt die Höhe der Stege etwa 150µm bis 250µm bei 50µm-100µm Breite. Durch jeden durch die Stege getrennten Kanal verlaufen verfahrensunabhängig beim PDP eine bzw. beim PALC zwei Elektroden zum Zünden des Plasmas.

Bei der Strukturierung dieser Flachbildschirmgläser, die am Beispiel eines 25"-PALC Schirmes die Größe von 360mm x 650mm aufweisen, kommt es wegen der späteren Positionierung der Elektroden entscheidend auf die genaue laterale Dimensionierung und relative Positionier- und Reproduziergenauigkeit der Kanäle und damit auf die Formstabilität des Formgebungswerkzeuges an. Wenn man beispielsweise von einer Heißformgebung mittels eines konventionellen Chrom-Nickel-Stahlwerkzeuges ausgeht, so liegt der Ausdehnungskoeffizient bei ca. 12 x 10⁻⁶/K. Bei beispielsweise 360 mm Werkzeuglänge, wie für einen 25" PALC-Bildschirm erforderlich, ergibt dies immerhin pro K Temperaturschwankung eine Längenänderung von ca. 4 µm. Wenn man davon ausgeht, daß die erforderliche Positioniergenauigkeit der Elektroden in den Mikrokanälen im Bereich von ± 10 µm liegt, können also ± 2,5 K Temperaturschwankung im Strukturwerkzeug erhebliche Probleme bereiten. Bei größeren Bildschirmen, wie beispielsweise 42"-Bildschirmen, sind die zulässigen Temperaturschwankungen entsprechend geringer.

Bei anderen Anwendungen von Flachgläsern mit Präzisionsstrukturen sind die Probleme ähnlich gelagert.

Vorstehende Anforderungen schränken also die Möglichkeiten konventioneller Heißformgebungsverfahren, wie Walzen oder Pressen ein. Die Heißformgebung erfolgt mit zwei unterschiedlichen technologischen Varianten.

Das Heißpressen erfolgt mit sehr heißem Glas. Das Formgebungswerkzeug, eine mit einer entsprechenden Struktur versehene Walze oder Preßform, wird gekühlt, so daß dem heißen Glas Energie entzogen wird und hierdurch eine Verfestigung der Strukturen stattfindet.

Beim Kaltpressen findet ein Energieeintrag durch das Werkzeug statt, das aus einer Walze oder einer Preßform besteht und durch eine entsprechende Energiequelle aufgeheizt wird. Das Werkzeug verbleibt zur Formgebung im gepreßten Glasmaterial, bis eine Abkühlung unter Tg erfolgt ist.

Beim Heispressen ist der Nachteil gegeben:
Findet eine Kontaktierung des Glases mit einem Preß- oder Walzwerkzeug als Formgebungswerkzeug nur kurzzeitig statt, d.h. vor der Erstarrung wird das Werkzeug vom Glas entfernt, so entstehen aufgrund des Zerfließens der Glasstruktur nach der Kontaktierung starke Verrundungen.
Bei einer langzeitigen Kontaktierung, die beim Verfahren des Kaltpressens angewendet wird, treten durch starke Temperaturunterschiede und unterschiedlicher thermischer Dehnungen von Werkzeug und Glas nicht tolerierbare laterale Spannungen auf.

Bei beiden Verfahren sind mit zunehmenden Werkzeugtemperaturen Verklebungen des Werkzeugs mit dem Glas schwer zu unterbinden. Eine weitere wesentliche Anforderung bei der Herstellung der gattungsgemäßen Gläser ist die Einhaltung eines stabilen Produktionsprozesses, bei dem die örtliche Verteilung und die Form der Strukturen extrem konstant eingehalten werden muß. Hieraus ergeben sich folgende zusätzliche Einschränkungen konventioneller Heißformgebung:
- Da beim konventionellen Kaltpressen das Formgebungswerkzeug vollständig aufgeheizt wird, um eine genügende Oberflächentemperatur an der Berührungsfläche zum Glas zu erreichen, treten hohe, in geforderten Genauigkeitsbereichen von +/- 2 K (bei typischen Werkzeugstählen und Flachglasgrößen notwendige Einschränkung) nicht reproduzierbare Temperaturen auf, die zu nicht tolerierbaren Deformationen des Werkzeuges führen.
- Bei der Herstellung von strukturiertem Glas mit geringen Strukturradien tritt ein hoher Werkzeugverschleiß auf, der einen ständigen Austausch des Formgebungswerkzeugs erfordert.

Die entsprechenden Nachteile sind auch bei dem durch die DE-A1-38 08 380 bekannt gewordenen Verfahren zum Prägen von Festprogrammen auf Glasdisks gegeben, bei dem eine vorgepreßte Glasscheibe mit glatter Oberfläche durch eine Strahlerplatte in einem begrenzten Oberflächenbereich aufgeheizt und unmittelbar danach durch einen Prägestempel mit der gewünschten Oberflächenstruktur versehen wird.

Der Erfindung liegt die Aufgabe zugrunde, das eingangs bezeichnete Verfahren so zu führen, bzw. die zugehörige Vorrichtung so auszubilden, daß ein Zerfließen der angeformten Glasstruktur, Verkleben von Glas und Werkzeug, und unkontrollierte Deformationen des Formgebungswerkzeuges, die zu Dimensionsschwankungen der Struktur führen, vermieden werden. Gleichzeitig muß eine große Produktivität erreicht werden können.

Die Lösung dieser Aufgabe gelingt für das Verfahren dadurch, daß das Formgebungswerkzeug erst kurz vor und/oder während der Kontaktierung mit der Glasoberfläche von außen lokal an der strukturgebenden Oberfläche bis zu einer von der Tiefe der Strukturen vorgebenen Oberflächentiefe auf eine Temperatur erwärmt wird, daß bei Berührung des Glases ein die Strukturen ausbildendes Aufschmelzen erfolgt.

Hinsichtlich der Vorrichtung gelingt die Lösung der Aufgabe gemäß der Erfindung dadurch, daß dem Formgebungswerkzeug mindestens eine äußere, wärmeerzeugende Quelle zugeordnet ist, mittels der kurz vor und/oder während der Kontaktierung des Formgebungswerkzeuges mit der Glasoberfläche seine strukturgebende Oberfläche von außen lokal bis zu einer von der Tiefe der Strukturen vorgebenen Oberflächentiefe auf eine Temperatur erwärmbar ist, daß bei Berührung des Glases ein die Strukturen ausbildendes Aufschmelzen erfolgt.

Es ist durch die DE-C2-31 14 881 bekannt geworden, Glaskörper mit exakt vorgegebener Gestalt (Sollkurve) und hoher Oberflächenqualität, z.B. Linsen, in der Weise herzustellen, daß ein Glaskörper, dessen Gestalt der angestrebten Gestalt bereits weitgehend angenähert ist, in den erforderlichen Oberflächenbereichen in einer zum Erreichen der Sollkurve ausreichenden Schichttiefe auf die für eine Verformung durch Pressen ausreichende Temperatur erwärmt und in diesen erwärmten Bereichen verformt wird.

In dem bekannten Fall geht es letztlich um ein Nach-Blankpressen des Glaskörpers, um eine glatte, keine sogenannte "Apfelsinenschalenstruktur" aufweisende Oberfläche zu erhalten, wogegen im Fall der Erfindung durch das lokale Aufheizen des Formgebungswerkzeuges unmittelbar vor oder während der Formgebung dazu dient, auf der Glasoberfläche Strukturen mit einer vorgegebenen Oberflächentiefe zu erzeugen.

Vorzugsweise wird zum lokalen Erwärmen der strukturgebenden Oberfläche des Formgebungswerkzeuges durch das Flachglas hindurch eine Laserstrahlung verwendet, die für Glas durchdringlich ist. Eine derartige Anordnung ermöglicht mit Vorteil eine sehr gleichförmige und reproduzierbare Aufwärmung der strukturgebenden Oberfläche, was alternativ auch durch eine elektrische oder induktive Heizung erzielbar ist.

Die strukturgebende Oberfläche des Formgebungswerkzeuges wird dabei vorzugsweise auf eine Temperatur erhitzt, die größer als Tg und kleiner als Tk ist, wobei Tg die Transformationstemperatur des zu strukturierenden Glases und Tk die Temperatur ist, bei der ein Werkzeug mit dem Glas verkleben würde. Bei einer möglichst hohen Temperatur, d.h. hohem Tk werden besonders präzise Strukturen im Flachglas erzielt, wobei es zur Erzielung einer hohen Produktivität förderlich ist, das Flachglas auf eine Temperatur T vorzuwärmen, die unter Tg (vorzugsweise 50 K - 200 K) liegt.

Um zu vermeiden, daß durch die Erwärmung der strukturgebenden Oberfläche mittels der äußeren Wärmequelle das Formgebungswerkzeug selbst zu sehr erwärmt wird, wird das Formgebungswerkzeug intern gekühlt.

Die Erwärmung durch die Laserstrahlung kann insbesondere zur Vorheizung zusätzlich durch andere geeignete Wärmequellen, beispielsweise Flammleisten, unterstützt werden, um zu vermeiden, daß teure Hochleistungslaser mit sehr hohen Leistungen eingesetzt werden müssen.

Für die Ausbildung der Strukturen durch das Formgebungswerkzeug ergeben sich mehrere Möglichkeiten. So kann nach einer Ausgestaltung der Erfindung das Formgebungswerkzeug kontinuierlich auf der zu strukturierenden Glasoberfläche abgerollt werden.

Um einen ständigen, teuren Austausch des gesamten Formgebungswerkzeuges infolge des Werkzeugverschleißes zu vermeiden, werden die Strukturen vorzugsweise mit einem zweigeteilten Formgebungswerkzeug ausgeführt, das aus einem Basiswerkzeug und einem daran lösbar angebrachten formgebenden Medium mit der strukturgebenden Oberfläche gebildet ist. Im Verschleißfall muß daher nur dieses formgebende Medium ersetzt werden, was relativ einfach und mit geringen Kosten möglich ist.

Ferner erlaubt diese Zweiteilung Freiheitsgrade in der Werkstoffwahl. Wenn beispielsweise gemäß einer Weiterbildung der Erfindung das Basiswerkzeug aus einem Material mit geringer Wärmeleitfähigkeit und das formgebende Medium aus einem Material mit hoher Wärmeleitfähigkeit besteht, ist eine ausgeprägte lokale Erwärmung auf die vorgegebene Oberflächentiefe möglich.

Weiterhin ist durch Wahl eines formgebenden Mediums mit einer hohen Schmelztemperatur eine geringe Verklebeneigung erzielbar. Besondere Vorteile werden auch gemäß einer Weiterbildung der Erfindung erzielt, wenn bei einem derartigen zweiteiligen Formgebungswerkzeug das formgebende Medium während des Abrollens des Formgebungswerkzeuges vom Basiswerkzeug abgewickelt, in das Glas gedrückt und dort während der Abkühlphase belassen wird. Wegen der geringen Wärmekapazität des formgebenden Mediums im Vergleich zum Werkzeug, einschließlich Basiswerkzeug, tritt eine wesentlich schnellere Abkühlung der angeformten Strukturen ein, was eine größere Produktivität und ein präzises Ausformen dieser Strukturen mit Vorteil nach sich zieht.

Weitere Ausgestaltungen sowie Weiterbildungen der Erfindung ergeben sich anhand von in den Zeichnungen dargestellten Ausführungsbeispielen.

Es zeigen:
- Figur 1: in einer Prinzipdarstellung eine Vorrichtung gemäß der Erfindung zum Aufheizen der strukturgebenden Oberfläche eines Formgebungswerkzeuges mittels Laser bei Durchdringung eines für Laserstrahlung transmissiven Mediums (Glas),
- Figur 2: in einer vergrößerten Darstellung ein zweiteiliges Formgebungswerkzeug mit einem Basiswerkzeug und einem formgebenden Medium,
- Figur 3: ein zweiteiliges Formgebungswerkzeug gemäß Figur 2 mit einer Walze als Basiswerkzeug und einem um diese Walze gewickelten strukturierten Blech als formgebendes Medium,
- Figur 4: ein zweiteiliges Formgebungswerkzeug entsprechend Figur 3, bei dem jedoch das formgebende Medium in Gestalt des strukturierten Bleches während des Abrollens der Basiswalze von dieser abgewickelt, in das Glas gedrückt wird und während der Abkühlphase im Glas verbleibt,
- Figur 5: ein zweiteiliges Formgebungswerkzeug mit einer Basiswalze, die mehrfach mit einem Bandmaterial schraubenförmig umwickelt ist,
- Figur 6: ein Formgebungswerkzeug, bestehend aus zwei mehrfach mit einem Bandmaterial als formgebendes Medium umwickelten achsparallelen Walzen, von denen die eine die Basiswalze mit einer Führungsstruktur in Form von senkrecht zur Walzenachse peripher umlaufenden Ringen ist,
- Figur 6a: eine Erweiterung der Ausführung nach Figur 6 um eine Spannwalze zwecks Spannen des Bandmaterials aufgrund thermischer Dehnungen, insbesondere beim Aufheizen des Formgebungswerkzeuges, und
- Figur 7: eine Ausführung nach Figur 6 bzw. 6a mit einer Laserstrahlaufheizung, bestehend aus einem Laserdiodenarray.

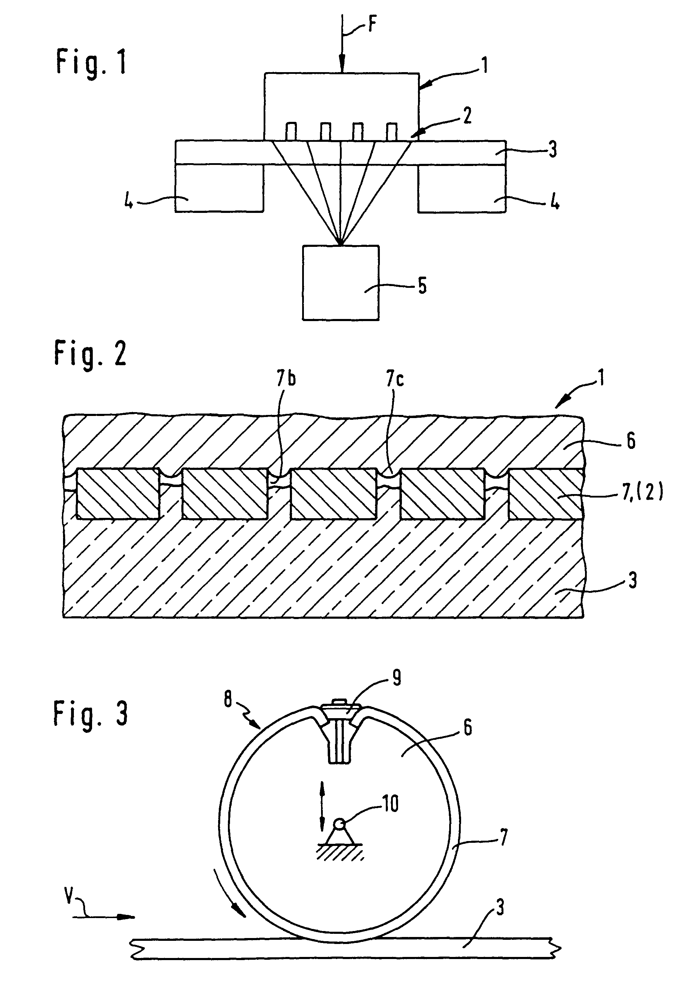

Die Figur 1 zeigt eine Vorrichtung für ein Verfahren zur Heißformgebung von Präzisionsstrukturen - hier in Form von Kanälen, die durch Stege getrennt sind - in einem Flachglas 3, im vorliegenden Ausführungsbeispiel ein Flachglas für einen Flachbildschirm mit Mikrokanalstrukturen. Die Vorrichtung sieht ein erwärmtes Formgebungswerkzeug 1 mit einer strukturgebenden Oberfläche 2 vor, das mittels einer Kraft F auf der Oberseite des Flachglases 3 in das Glasmaterial gedrückt wird, um dort die gewünschten Präzisionsstrukturen auszuformen. Die Vorrichtung weist ferner Gegenkraftaufnahmen 4 auf, um die Kraft F in bezug auf die Glasplatte 3 zu kompensieren. Gemäß der Erfindung wird das Formgebungswerkzeug 1 erst kurz vor und/oder während der Kontaktierung mit der Glasoberfläche von außen lokal an der strukturgebenden Oberfläche 2 bis zu einer von der Tiefe der Strukturen vorgebenen Oberflächentiefe auf eine Temperatur erwärmt, daß bei Berührung des Glases ein die Strukturen ausbildendes Aufschmelzen erfolgt. Im vorliegenden Ausführungsbeispiel wird dabei gemäß einer Ausgestaltung der Erfindung zum lokalen äußeren Aufwärmen der strukturgebenden Oberfläche 2 mittels eines Lasers 5 eine Laserstrahlung durch das Flachglas 3 auf die strukturgebende Oberfläche des Formgebungswerkzeuges 1 gerichtet. Alternativ kann auch eine induktive oder elektrische Widerstandsheizung vorgesehen sein.

Dadurch, daß die Einbringung der Wärmeenergie lokal nur an der strukturgebendenen Oberfläche stattfindet, kann bei exakter Temperaturführung der Oberfläche mit Vorteil eine vollständige Aufheizung des Werkzeuges umgangen werden, wodurch die eingangs erwähnten Nachteile vermieden werden können.

Der Laser 5 ist so ausgewählt, daß er einen Laserstrahl erzeugt, der für Glas eine möglichst hohe Transmission aufweist, d.h. keine nennenswerte Aufheizung des Flachglases stattfindet, und die strukturgebende Oberfläche 2 nur auf eine derartige Temperatur aufheizt, daß bei Berührung des Glases ein Aufschmelzen stattfindet. Dabei wird das Glas 3 ggf. mittels einer geeigneten anderen Energiequelle bereits auf eine Temperatur vorgeheizt, bei der das Glas noch eine gewisse mechanische Eigenstabilität aufweist (unterhalb der Transformationstemperatur Tg), und von dem Laser 5 nur die zum Aufschmelzen der Oberfläche benötigte Energie eingebracht wird. Die Temperatur, auf die das Glas vorgeheizt werden kann, beträgt etwa 50 bis 200 K unter Tg. Sie sollte, ansich möglichst tief unter Tg liegen, da das Glas 3 dann fester bleibt. Dies hat aber den Nachteil, daß längere Laser-Bestrahlungszeiten und größere Spannungen innerhalb der ausgeformten Stege auftreten.

Um zu vermeiden, daß sich das Formgebungswerkzeug 1 aufgrund der Erwärmung der strukturgebenden Oberfläche 2 zu sehr erwärmt, wird das Werkzeug 1 mit bekannten Mitteln intern gekühlt.

Das Aufheizen des Formgebungswerkzeuges 1 bzw. dessen strukturgebende Oberfläche 2 zum Formgeben erfolgt auf Temperaturen oberhalb Tg des Glases, aber unterhalb der Temperatur Tk, bei der das Glas am Werkzeug kleben würde. Diese letztere Temperatur ist abhängig vom Material des Formgebungswerkzeuges und gegebenenfalls von einer Anti-Haft-Beschichtung, sowie auch von der Glassorte. Beispiele für Materialien, an denen Glas schlecht haftet, sind z.B. Chrom-Nickel-Stähle, die bis ca. 850 K einsetzbar sind, weil sie erst bei höheren Temperaturen zum Verkleben neigen. Noch schlechter haften Platin-Gold-Legierungen, ein Material, das allerdings sehr teuer ist, so daß man bemüht ist, geringe Mengen einzusetzen oder einfachere Materialien zu verwenden.

Gegebenenfalls kann die Aufheizung der strukturgebenden Oberfläche 2 des Formgebungswerkzeuges 1 mittels des Lasers 5 auch um andere, geeignete konventionelle Wärmequellen (Flammleisten o.ä.) ergänzt werden. Diese zusätzliche Aufheizung ist insbesondere in der Anlaufphase von Vorteil. Die strukturgebende Oberfläche 2 wird dabei etwa bis zu Tg vorgeheizt.

Ein Vorteil des Einsatzes des Lasers 5 gegenüber konventionellen Wärmequellen besteht in der Möglichkeit einer exakteren örtlichen und leistungsmäßigen Dosierung. Als Laserquellen eignen sich beispielsweise Nd-YAG-Laser (Wellenlänge 1064 nm) und Hochleistungsdiodenlaser (Wellenlänge etwa 800 nm). Zur gezielten Einbringung der Laserstrahlung ist es notwendig, wie in Figur 1 skizzenhaft angedeutet, konstruktive Maßnahmen zur Führung des Strahles auf das Werkzeug 1 bzw. dessen strukturgebende Oberfläche 2 vorzusehen, was im Können des Fachmannes liegt.

Der mit dem eingangs erwähnten hohen Werkzeugverschleiß verbundene hohe Kosten- und Umrüstaufwand kann mit Vorteil dadurch umgangen werden, daß, wie im Besonderen aus Figur 2 deutlich wird, die dem Verschleiß unterliegende strukturgebende Oberfläche 2 des Formgebungswerkzeuges 1 durch ein formgebendes Medium 7 ausgebildet wird, das lösbar an einem Basiswerkzeug 6 befestigt wird. Dieses formgebende Medium kann, wie dargestellt werden wird, durch verschiedenartige Strukturen gebildet werden. Im Ausführungsbeispiel nach Figur 2 ist ein dünnes strukturiertes Blech 7 vorgesehen, das den auszuformenden Stegen konforme Durchbrüche 7b aufweist. In die Oberfläche des Basiswerkzeuges 6 sind dabei, wie in Figur 2 skizziert, den Durchbrüchen entsprechende Strukturen 7c zur Positionierung des Bleches eingebracht. Diese Strukturen sind im Falle der Anwendung bei Flachbildschirmgläsern zudem wesentlich einfacher zu erzeugen, als ein strukturiertes Einkomponenten-Werkzeug zur direkten Formgebung. Das dünne Blech 7, das die strukturgebende Oberfläche 2 bildet, kann Stärken von etwa 50 µm bis 600 µm besitzen, bevorzugt sind für Displayanwendungen etwa 100 bis 250 µm. Die Abstände der zur Ausbildung der Stege notwendigen Durchbrüche 7b (Schlitze) betragen etwa 150 - 750 µm, die Schlitzbreite etwa 50-100µm.

Anstelle der Durchbrüche 7b im Blechteil 7 können auch Einbuchtungen, in der Drucktechnik Näpfchen genannt, vorgesehen sein.

Durch die Trennung des formgebenden Mediums, des strukturierten Bleches 7, vom Basiswerkzeug 6, das durch eine Walze oder einen Stempel gebildet werden kann, kann mit Vorteil für das Basiswerkzeug 6 ein Material mit geringer thermischer Dehnung und hoher Reibfestigkeit, beispielsweise ein spezielles Keramikmaterial, verwendet werden. Bei der Auswahl des separaten formgebenden Mediums 7 kann anderen Faktoren, wie beispielsweise einer minimalen Verklebeneigung mit dem Glas, hoher Verschleißfestigkeit und hoher Temperaturbeständigkeit, wie sie z.B. durch die erwähnten Chrom-Nickel-Stähle oder Platin-Gold-Legierungen erzielt werden, Rechnung getragen werden.

So ist es denkbar, als Werkstoff für das Basiswerkzeug 6 Quarzal zu verwenden, das einen sehr geringen Ausdehnungskoeffizienten von 0,56 x 10⁻⁶/K besitzt. Im Vergleich zur Verwendung von Stahl als Basiswerkzeug sind dann bei gleichen zulässigen Längenschwankungen etwa 20-fache Temperaturschwankungen zulässig. Dies sind bei einem 25"-Display etwa +/- 40K.

Der Werkstoff Quarzal besitzt auch eine geringe Wärmeleitfähigkeit. Nimmt man zugleich für das formgebende Medium einen gut wärmeleitenden Werkstoff, z.B. ein strukturiertes Blechteil gemäß Figur 2, dann ist gemäß einem weiteren Vorteil des Zwei-Komponentenwerkezuges eine ausgeprägte lokale isolierte Erwärmung auf die vorgegebene Oberflächentiefe möglich. Da Quarzal auch gleichzeitig eine schlechte elektrische Leitfähigkeit besitzt, ist bei Verwendung von Quarzal als Werkstoff für das Basiswerkzeug 6 alternativ zum Laser 5 gemäß Figur 1 eine induktive oder elektrische Heizung zur Aufheizung des formgebenden Mediums 7 möglich.

Ein weiterer Vorteil der Trennung zwischen Basiswerkzeug 6 und formgebendem Medium 7 besteht noch darin, daß nach der Formgebung des Glases 3 das formgebende Medium 7 im Glas belassen werden kann, bis dieses abgekühlt ist. Im Vergleich zur Belassung eines vollständigen konventionellen Werkzeuges in der Glasstruktur tritt wegen der geringen Wärmekapazität des formgebenden Mediums eine wesentlich schnellere Abkühlung ein. Insbesondere bei segmentiertem, mit Durchbrüchen 7b versehenem formgebendem Medium, wie im Fall des Bleches 7 nach Figur 2, werden während der Abkühlung Spannungen zwischen Glas 3 und dem Formgebungswerkzeug 1 minimiert, da thermische Dehnungen des Bleches durch die Durchbrüche kompensiert werden. Das Auslösen des formgebenden Mediums kann dabei durch eine Konizität der erhabenen Teile der strukturgebenden Oberfläche 2 gefördert werden.

Das dem Verschleiß unterliegende Blech 7 kann durch entsprechende konstruktive Lösungen problemlos ohne das Basiswerkzeug zu wechseln, ausgetauscht werden. Hierzu sind verschiedene, später noch beschriebene Vorrichtungen einsetzbar.

Aus der vergrößerten Darstellung nach Figur 2 wird deutlich, daß die Aufheizung des Werkzeuges 1 prinzipiell lediglich an der dem Glas zugewandten Oberfläche des formgebenden Mediums 7 erfolgen muß, weil die am weitesten vorstehende Oberfläche 2 des Formgebungswerkzeuges 1 in das Glas 3 eindringt und dort das Verdrängen des Glases herbeiführen muß. Das Glasmaterial wird dann durch diese Flächen zur Seite gedrückt und kann in die Zwischenräume 7b eindringen. Bei Verwendung eines Lasers 5, wie in Figur 1, erhitzt dieser somit im wesentlichen nur die dem Glas zugewandte Oberfläche, wobei auch die Seitenflächen der am weitesten vorstehenden Oberflächen miterwärmt werden. Eine Erwärmung weiterer Flächen des Formgebungswerkzeuges 1 ist insofern dann nicht erforderlich.

Für die Ausbildung des Formgebungswerkzeuges, bestehend aus dem Basiswerkzeug und dem separaten formgebenden Medium, sind verschiedene Ausführungsformen möglich, von denen einige anhand der Figur 3 und folgende beschrieben werden. Die Figur 3 zeigt ein als Walze 8 ausgebildetes Formgebungswerkzeug mit dem Basiswerkzeug 6 und dem formgebenden Medium 7, hier ein perforiertes Blech wie in Figur 2, das mittels einer Spannvorrichtung 9 an dem Basiswerkzeug 6 befestigt ist. Zur Positionierung des Bleches besitzt die Walze 8 analog der Darstellung in Figur 2 eine entsprechende Struktur 7c. Die Drehachse 10 der Walze 8 ist in horizontaler Richtung ortsfest gelagert. Das Glas 3 wird mit der Vorschubgeschwindigkeit V quasi unter der Walze 8 durchgeführt, die sich entsprechend der Pfeilrichtung dreht und beim Abrollen über die Oberfläche des Flachglases 3 die gewünschten Strukturen aufbringt. Die Walze 8 ist dabei vorzugsweise in vertikaler Richtung weggesteuert, um die Eindringtiefe in das Glas 3 zu steuern.

Die Vorschubgeschwindigkeit des Flachglases 3 liegt bei 0,1-1 m/min. Wenn man von einer Walze mit 200 mm Durchmesser ausgeht, so wird etwa 1 - 10 mm vor dem Kontakt der Walze mit dem Glas 3 das Werkzeug erhitzt, d.h. etwa 1 sec vor der Kontaktgebung des Formgebungswerkzeuges mit dem Glas 3 wird dieses aufgeheizt.

Bei der dem Papier-Tiefdruck angelehnten Ausführungsform wird somit das gesamte Basiswerkzeug mit dem formgebenden Medium kontaktiert. Durch entsprechende, dem Tiefdruck entnommene Spanntechniken 9 wird dabei ein planes Anliegen des formgebenden Mediums am Basiswerkzeug 6 gewährleistet.

Um die Walzenachse 10 so zu halten, daß sie nur in vertikaler Richtung, wie durch die Pfeile angedeutet, verschiebbar ist, stehen dem Fachmann verschiedene Konstruktionsmöglichkeiten zur Verfügung. Die Anordnung kann dabei auch so getroffen werden, daß die Walze 8, die mit einer großen Kraft F gegen das Glas 3 gedrückt wird, sich allein durch den Vorschub der Glasplatte 3 mitdreht. Es kann allerdings auch ein ergänzender Antrieb für die Walzenachse 10 vorgesehen sein.

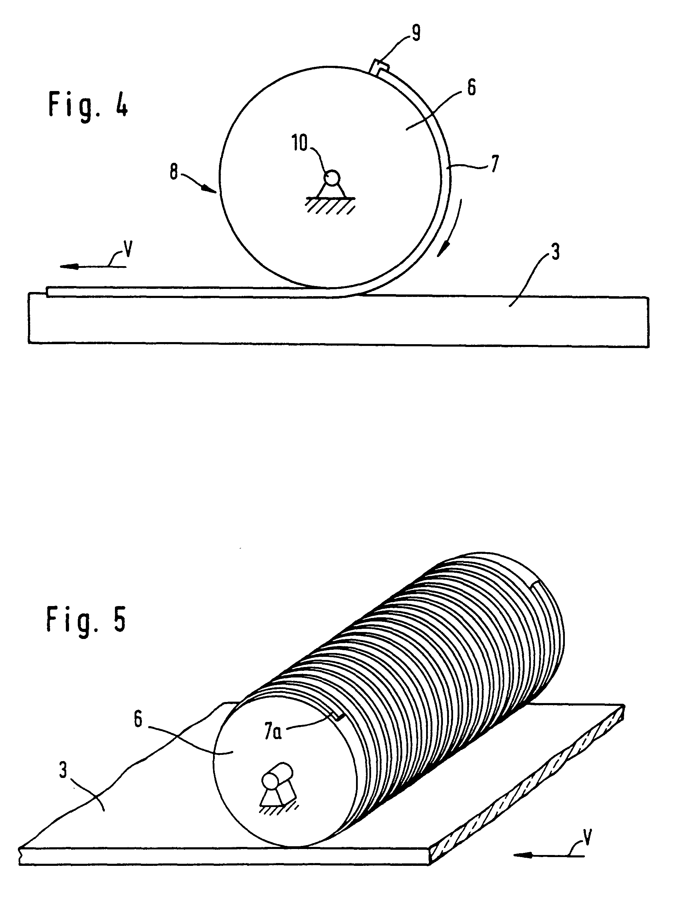

Die Figur 4 zeigt eine andere Ausführungsform für die Einbringung der gewünschten Struktur in das mit dem Vorschub V horizontal bewegte Flachglas 3 mittels eines walzenförmigen Formgebungswerkzeuges 8, das entsprechend der Figur 3 aufgebaut ist. Im Gegensatz zu der Ausführungsform nach Figur 3 wird während des Rollens der Formgebungswalze 8 das formgebende Medium 7 in Form eines Bleches vom Basiswerkzeug 6 abgewickelt, in das Glas 3 gedrückt und dort während der Abkühlphase belassen. Hieraus ergibt sich während der Abkühlphase eine mechanische Stabilisierung der Glasstruktur (das formgebende Medium 7 verhindert ein Zerfließen des noch flüssigen Glases), die bei konventionellen Heißformgebungsprozessen nicht erzielt wird. Nach der Formgebung der Strukturen im Flachglas 3 kann das abgekühlte formgebende Medium 7 aufgrund der größeren thermischen Kontraktion gegenüber dem Glas 3 wieder leicht aus der ausgeformten Struktur entfernt werden. Ein leicht konischer Verlauf der erhabenen Strukturteile des formgebenden Mediums 7 unterstützt dieses Auslösen.

Eine weitere Ausführungsform ist in Figur 5 dargestellt, bei der das formgebende Medium nicht, wie in den Figuren 3 und 4, als zusammenhängendes, strukturiertes Blech, sondern als Bandmaterial 7a auf das walzenförmige Basiswerkzeug 6 schraubenförmig aufgewickelt ist. Die Ausführungsform nach Figur 5 stellt sozusagen eine Abwandlung der Ausführungsform von Figur 3 dar, bei der anstelle eines zusammenhängenden Bleches 7, an einem Walzenende beginnend, das Bandmaterial 7a um eine Basiswalze 6 entlang eines schraubenförmig vorstrukturierten Steges gewickelt wird, der auch der Abstandseinhaltung des Bandmateriales dient. Gegenüber der Ausführungsform nach Figur 3 besteht die Einschränkung darin, daß zwischen den auf der Basiswalze 6 befindlichen Bandwicklungen ein Spalt besteht. Dadurch ist jedoch die Ausführungsform nach Figur 5 prädestiniert für die Einbringung von Linienstrukturen in das Flachglas 3, wie sie beispielsweise bei den eingangs erwähnten Flachbildschirmgläsern aufgebracht werden müssen.

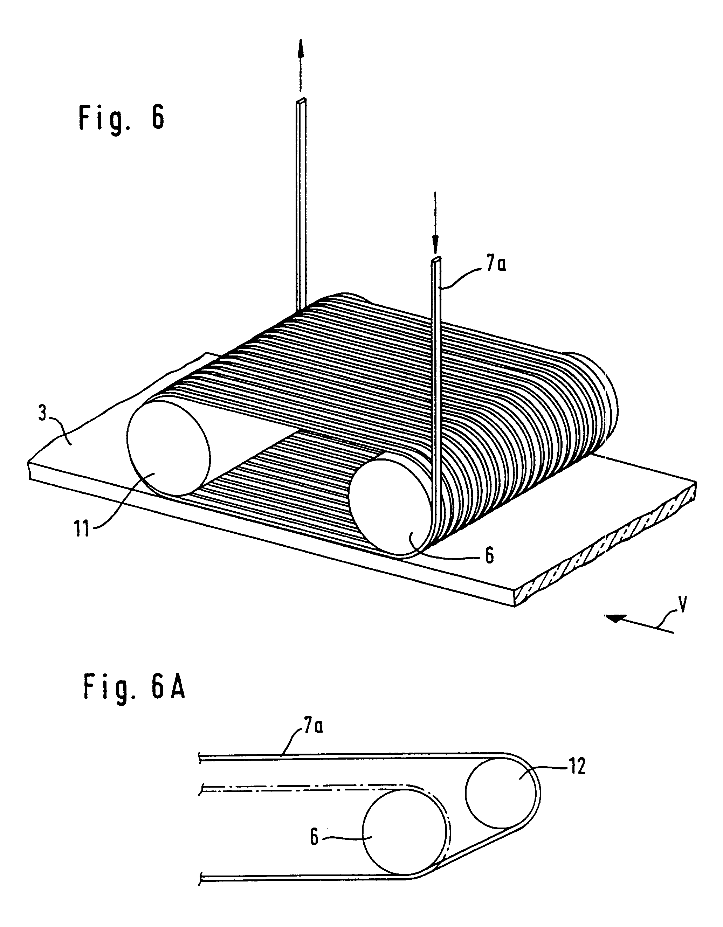

Eine weitere Ausführungsform, bei der das formgebende Medium nicht als vollständiges Blech, sondern als Bandmaterial entsprechend Figur 5 ausgestaltet ist, ist in Figur 6 dargestellt. Während bei der Ausführungsform bei Figur 5 das Bandmaterial fest auf der Walze 6 angebracht ist und diese Walze 6 mit dem Bandmaterial 7a vollständig über die Oberfläche des Glases 3 abrollt, zeigt die Figur 6 eine Ausführungsform, bei der ähnlich wie in Figur 4 das formgebende Medium, das Bandmaterial 7a, für eine vorgegebene Zeit in den auszuformenden Strukturen nach dem Aufschmelzen des Glases belassen wird. Die Ausführungsform nach Figur 6 sieht zu diesem Zweck zwei achsparallele Walzen vor, eine Basiswalze 6 und eine Hilfswalze 11. Die formgebende Basiswalze 6, auf deren einen Ende sich die Bandmaterialzufuhr gemäß dem Pfeil befindet, ist mit senkrecht zur Walzenachse geschlossenen Ringen zur Führung des Bandmateriales 7a versehen, die auch zur Abstandseinstellung des Bandmateriales dienen. Die Basiswalze 6 dient dazu, zur Strukturgebung das Bandmaterial 7a in das Flachglas 3 einzudrücken, um es dann zur Strukturerhaltung während der Abkühlungsphase im Glas 3 zu belassen. Hieraus ergibt sich während der Abkühlungsphase eine mechanische Stabilisierung der Glasstruktur (kein Zerfließen) wie bei der Ausführungsform nach Figur 4, die bei konventionellen Heißformgebungsprozessen nicht erzielt wird. Nach der Strukturierung wird das abgekühlte formgebende Bandmedium 7a mittels der zur Basiswalze 6 achsparallelen Hilfswalze 11 aus der Struktur entfernt. Diese Hilfswalze ist vorzugsweise nicht strukturiert, um eventuelle Temperatur- und damit verbundene Längenunterschiede zur Basiswalze 6 kompensieren zu können. Auf dem einen Ende dieser Hilfswalze befindet sich auch die Abführ des Bandmaterials gemäß dem gezeigten Pfeil. Es ist auch möglich, mehrere Bandzu- und abfuhren auf einer Walze zu realisieren.

Die Führung des Bandes 7a auf der hinteren Hilfswalze 11 erfolgt durch den Vorschub des Glases 3, da das Glas nach der Strukturbildung sehr schnell erstarrt und das Band 7a dadurch bis zum Abheben an der Hilfswalze 11 lateral fixiert ist.

Die Breite des die Struktur formenden Bandes 7a beträgt bei Displayanwendungen etwa 150-750 µm (= Pitchbreite) abzüglich der Schlitzbreite von 50-100µm, vorzugsweise 200-600 µm. Es ist auch möglich, Bänder mit einer Breite von unterhalb 150 µm zu verwenden, jedoch nimmt dann die Reißfestigkeit des Bandes immer mehr ab. Der Abstand der Bänder voneinander, vorgegeben durch die Führungsringe auf der Basiswalze 6, soll etwa 20-120 µm betragen, vorzugsweise so gering wie möglich sein. Für das Bandmaterial der Ausführungsformen nach den Figuren 5 und 6 bestehen hinsichtlich des Werkstoffes, aus dem sie gebildet werden, die im Zusammenhang mit der Ausführungsform nach Figur 1 beschriebenen Randbedingungen hinsichtlich des Verklebens mit dem Glas und der Kostensituation. Da insoweit eine Platin-Gold-Legierung auf der einen Seite besondere Vorteile hinsichtlich des Nichtverklebens mit dem Glas besitzt, auf der anderen Seite jedoch sehr teuer ist, muß ein massiv aus diesem Werkstoff bestehendes Band rückgeschmolzen werden. Um diesen Aufwand zu vermeiden, sollte bevorzugt, wenn die Verklebeneigung tolerierbar ist, als Grundmaterial ein Stahlband, das eine entsprechende Zugfestigkeit aufweist und mit einer Anti-Klebe-Schicht versehen ist, verwendet werden.

Die Aufheizung des Bandmaterials 7a erfolgt vorzugsweise mittels Laserstrahlung, wobei, wie vorstehend erwähnt, auch eine induktive oder elektrische Heizung eingesetzt werden kann.

Eine aus Quarzal bestehende Basiswalze 6 muß bei Displayanwendungen am Beispiel eines 25"-Bildschirms mit einer Toleranz von ca. ± 40°C temperiert werden, damit insoweit keine zusätzliche Ausdehnung stattfindet, die die gewünschte Genauigkeit von ±10µm verhindern würde. Zum Zwecke der allgemeinen Erläuterung sei darauf hingewiesen, daß die Ausführungsform mit dem Bandmaterial nach Figur 6 im wesentlichen der Struktur der bekannten Wafersäge entspricht. Der Abstand zwischen den Walzen 6 und 11 kann wegen der schnellen Abkühlung des formgebenden Mediums im Glas vergleichsweise gering bis zur näherungsweisen Berührung gehalten werden. Es muß sichergestellt werden, daß das Bandmaterial 7a einige Sekunden in der aufgeschmolzenen Struktur des Flachglases 3 bleibt, bis diese Struktur abgekühlt ist. Der Richtwert eines Abstandes der Walzenachsen von 200 mm gilt für eine bestimmte Vorschubgeschwindigkeit; wenn diese sich ändert, so ändern sich auch entsprechend die vorgegebenen Werte des Abstandes und der Verweildauer des Bandmaterials im Glas.

Weil durch das Aufwärmen des Bandmaterials 7a vor und/oder während der Kontaktierung dieses durch thermische Dehnung locker wird, ist es gemäß der Ausführungsform in Figur 6a vorteilhaft, eine dritte, nicht strukturierte Walze 12 als Spannwalze vorzusehen, durch die das Bandmaterial gespannt wird. Das Bandmaterial ist hierdurch nur noch über einen kleinen Winkelbereich mit der Basiswalze kontaktiert. Zur Ausbildung der Anordnung nach Figur 6a stehen dem Fachmann entsprechende Konstruktionen zur Verfügung.

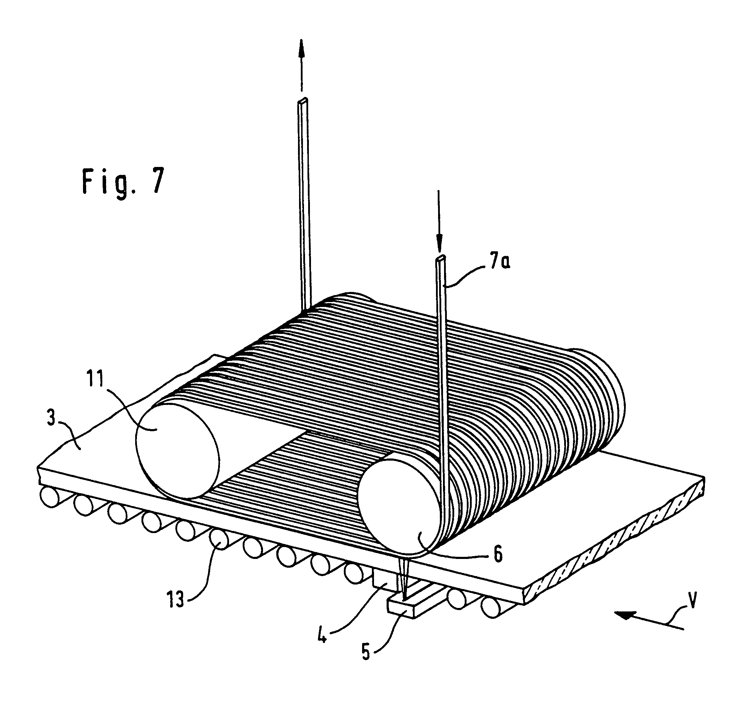

Sämtliche bislang beschriebenen Ausführungsformen sind mit einem Laser zur Aufheizung des formgebenden Mediums 7 bzw. 7a kombinierbar. Die Figur 7 stellt eine Ausführungsform von Figur 6 mit einer entsprechenden Laserstrahl-Aufheizung dar. Als Laserquelle 5 dient hier ein Array mehrerer nebeneinander positionierter Diodenlaser. Diese Laserzeile erzeugt ein zu den Walzenachsen paralleles homogenes Strahlprofil auf der Breite der Basiswalze 6. Zur Aufbringung der Laserstrahlung auf das formgebende Medium 7a und zur Gegenkraftaufnahme der Druckkraft F gleitet das Flachglas 3, das mittels Transportrollen 13 geführt ist, einseitig über einen Gleitfuß 4, neben dem der Strahl des Lasers geführt wird. Ein entsprechender Laser ist beispielsweise mit einer Leistung von 800 Watt bei 0,5 m Zeilenlänge kommerziell erhältlich. Setzt man einen typischen Anteil von etwa 30 % für die in Stähle in Wärme umgesetzte Gesamtleistung an, so ergeben sich eingebrachte Wärmeleistungen von 240 Watt. Bezogen auf typische Flachbildschirmgläser von 360 mm x 650 mm kann mittels eines Lasers von 800 Watt Leistung das formgebende Medium in einem Zeitraum von etwa einer Minute um 100 K aufgeheizt werden, bei Verwendung des Werkstoffes Stahl in dem formgebenden Medium mit einer Dicke von 150 µm. Positioniert man die Laserdioden darüber hinaus noch übereinander, so kann die Laserleistung noch vervielfacht werden.

## Patentansprüche

1. Verfahren zur Heißformgebung von Präzisionsstrukturen in Flachglas, bei dem ein erwärmtes Formgebungswerkzeug mit einer strukturgebenden Oberfläche auf einer Seite des Flachglases in das Glasmaterial gedrückt wird, **dadurch gekennzeichnet, daß** das Formgebungswerkzeug erst kurz vor und/oder während der Kontaktierung mit der Glasoberfläche von außen lokal an der strukturgebenden Oberfläche bis zu einer von der Tiefe der Strukturen vorgebenenen Oberflächentiefe auf eine solche Temperatur erwärmt wird, daß bei Berührung des Glases ein die Strukturen ausbildendes Aufschmelzen erfolgt.

2. Verfahren nach Anspruch 1, **dadurch gekennzeichnet, daß** zum lokalen Erwärmen der strukturgebenden Oberfläche des Formgebungswerkzeuges eine Laserstrahlung durch das Flachglas auf die strukturgebende Oberfläche gerichtet wird.

3. Verfahren nach Anspruch 2, **dadurch gekennzeichnet, daß** die Erwärmung durch Laserstrahlung zusätzlich durch andere geeignete Wärmequellen, beispielsweise Flammleisten, unterstützt wird.

4. Verfahren nach Anspruch 1, **dadurch gekennzeichnet, daß** das lokale Erwärmen der strukturgebenden Oberfläche des Formgebungswerkzeuges durch eine induktive Heizung erfolgt.

5. Verfahren nach Anspruch 1, **dadurch gekennzeichnet, daß** das lokale Erwärmen der strukturgebenden Oberfläche des Formgebungswerkzeuges durch eine elektrische Widerstandsheizung erfolgt.

6. Verfahren nach einem der Ansprüche 1 bis 5, **dadurch gekennzeichnet, daß** die strukturgebende Oberfläche des Formgebungswerkzeuges auf eine Temperatur erhitzt wird, die größer Tg und kleiner Tk ist, wobei Tg die Transformationstemperatur des zu strukturierenden Glases und Tk die Temperatur ist, bei der ein Werkzeug mit dem Glas verkleben würde.

7. Verfahren nach einem der Ansprüche 1 bis 6, **dadurch gekennzeichnet, daß** das Flachglas mittels geeigneter wärmeerzeugender Quellen auf eine Temperatur T vorgewärmt wird, die 50 K bis 200 K unter Tg liegt.

8. Verfahren nach einem der Ansprüche 1 bis 7, **dadurch gekennzeichnet, daß** beim Erwärmen der strukturgebenden Oberfläche durch eine interne Kühlung des Formgebungswerkzeuges und durch eine geringe thermische Leitfähigkeit des Materials des Formgebungswerkzeugs dessen innere Aufheizung minimiert wird.

9. Verfahren nach einem der Ansprüche 1 bis 8, **dadurch gekennzeichnet, daß** das Formgebungswerkzeug kontinuierlich auf der zu strukturierenden Glasoberfläche abgerollt wird.

10. Verfahren nach einem der Ansprüche 1 bis 9, **dadurch gekennzeichnet, daß** die Heißformgebung mit einem Formgebungswerkzeug durchgeführt wird, das aus einem Basiswerkzeug und einem daran lösbar angebrachten formgebenden Medium mit der strukturgebenden Oberfläche gebildet ist.

11. Verfahren nach Anspruch 9 und 10, **dadurch gekennzeichnet, daß** das formgebende Medium während des Abrollens des Formgebungswerkzeuges auf der zu strukturierenden Glasoberfläche vom Basiswerkzeug abgewickelt, in das Glas gedrückt und dort während der Abkühlphase belassen wird.

12. Vorrichtung zur Durchführung des Verfahrens zur Heißformgebung von Präzisionsstrukturen in Flachglas (3) nach Anspruch 1 oder einem der folgenden, mit einem erwärmten Formgebungswerkzeug (1) mit einer strukturgebenden Oberfläche, das auf eine Seite des Flachglases (3) andrückbar ist, **dadurch gekennzeichnet, daß** dem Formgebungswerkzeug (1) mindestens eine äußere wärmeerzeugende Quelle (5) zugeordnet ist, mittels der kurz vor und/oder während der Kontaktierung des Formgebungswerkzeuges (1) mit der Glasoberfläche seine strukturgebende Oberfläche von außen lokal bis zu einer von der Tiefe der Strukturen vorgegebenen Oberflächentiefe auf eine solche Temperatur erwärmbar ist, daß bei Berührung des Glases ein die Strukturen ausbildendes Aufschmelzen erfolgt.

13. Vorrichtung nach Anspruch 12, **dadurch gekennzeichnet, daß** die wärmeerzeugende Quelle (5) eine Strahlungsquelle ist.

14. Vorrichtung nach Anspruch 13, **dadurch gekennzeichnet, daß** die Strahlungsquelle ein Laser (5) ist.

15. Vorrichtung nach Anspruch 14, **dadurch gekennzeichnet, daß** der Laser (5) durch ein Array von Laserdioden gebildet ist.

16. Vorrichtung nach Anspruch 14 oder 15, **dadurch gekennzeichnet, daß** die Laser-Strahlungsquelle (5) auf der dem Formgebungswerkzeug (1) abgewandten Seite des Flachglases (3) angeordnet ist und eine für Glas transmissive Wellenlänge besitzt.

17. Vorrichtung nach einem der Ansprüche 120 bis 163, **dadurch gekennzeichnet, daß** das Formgebungswerkzeug (1) aus einem Basiswerkzeug (6) und einem darauf angeordneten separaten, formgebenden Medium (7, 7a) besteht.

18. Vorrichtung nach Anspruch 17, **dadurch gekennzeichnet, daß** das Basiswerkzeug (6) aus einem Material mit geringer Wärmeleitfähigkeit und das formgebende Medium (7, 7a) aus einem Material mit hoher Wärmeleitfähigkeit besteht.

19. Vorrichtung nach Anspruch 18, **dadurch gekennzeichnet, daß** das Basiswerkzeug (6) aus Keramik besteht, das vorzugsweise eine geringe thermische Dehnung besitzt.

20. Vorrichtung nach Anspruch 18 oder 19, **dadurch gekennzeichnet, daß** das formgebende Medium (7) durch ein strukturiertes Blechteil mit geringer Verklebeneigung für Glas gebildet ist.

21. Vorrichtung nach Anspruch 20, **dadurch gekennzeichnet, daß** das strukturierte Blechteil lösbar am Basiswerkzeug (6) befestigt ist.

22. Vorrichtung nach Anspruch 21, **dadurch gekennzeichnet, daß** das strukturierte Blechteil am Basiswerkzeug (6) von ihm abwickelbar befestigt ist.

23. Vorrichtung nach einem der Ansprüche 17 bis 22, **dadurch gekennzeichnet, daß** das Basiswerkzeug (6) eine Walze ist.

24. Vorrichtung nach einem der Ansprüche 17 bis 23, **dadurch gekennzeichnet, daß** das Basiswerkzeug (6) eine Struktur (7c) zur Fixierung des formgebenden Mediums (7) auf dem Basiswerkzeug (6) aufweist.

25. Vorrichtung nach Anspruch 23, **dadurch gekennzeichnet, daß** das formgebende Medium (7) aus einem um das als Walze ausgebildete Basiswerkzeug (6) gewickelten Bandmaterial (7a) besteht.

26. Vorrichtung nach Anspruch 25 **dadurch gekennzeichnet, daß** die Walze eine Führungsstruktur für das Bandmaterial aufweist.

27. Vorrichtung nach Anspruch 26 **dadurch gekennzeichnet, daß** die Führungsstruktur durch schraubenförmig angeordnete Stege gebildet ist.

28. Vorrichtung nach Anspruch 26, **dadurch gekennzeichnet, daß** die Führungsstruktur durch koaxial zur Walzenachse peripher umlaufende Ringe gebildet ist.

29. Vorrichtung nach einem der Ansprüche 25, 26 oder 28, **dadurch gekennzeichnet, daß** im Formgebungswerkzeug (1) im Abstand zu der als Basiswerkzeug (6) dienenden Walze eine zweite Hilfswalze (11) achsparallel zum Basiswerkzeug (6) angeordnet ist, und das Bandmaterial (7a), dessen Wicklungen auf den Walzen durch die Führungsstruktur auf Abstand zueinander gehalten werden, über beide Walzen (6, 11) unter kontinuierlichem Zuführen und Abführen des Bandmaterials abwickelbar ist.

30. Vorrichtung nach Anspruch 29, **dadurch gekennzeichnet, daß** der als Basiswerkzeug (6) dienenden Walze mindestens eine Zuführeinrichtung für das Bandmaterial und der Hilfswalze (11) mindestens eine Abführeinrichtung für das Bandmaterial (7a) zugeordnet sind.

31. Vorrichtung nach Anspruch 29 oder 30, **dadurch gekennzeichnet, daß** zum Spannen des über die Basiswalze (6) und die Hilfswalze (11) umlaufenden Bandmaterials (7a) eine zusätzliche Spannwalze (12) vorgesehen ist.

32. Vorrichtung nach einem der Ansprüche 12 bis 31, **dadurch gekennzeichnet, daß** die erhabenen Strukturteile der strukturgebenden Oberfläche (2) des Formgebungswerkzeuges (1) eine vorgegebene Konizität zum besseren Auslösen aus der geformten Glasstruktur aufweisen.

## Claims

1. Process for the hot-forming of precision structures in flat glass, in which a heated forming tool with a structuring surface is pressed into the glass material on one side of the flat glass, **characterized in that** the forming tool, only just before and/or during contact with the glass surface, is heated locally from the outside on the structuring surface, down to a surface depth which is predetermined by the depth of the structures, to a temperature which is such that, on contact with the glass, melting which forms the structures takes place.

2. Process according to Claim 1, **characterized in that** laser radiation is directed through the flat glass onto the structuring surface in order to locally heat the structuring surface of the forming tool.

3. Process according to Claim 2, **characterized in that** the heating by laser radiation is additionally assisted by other suitable heat sources, for example flame strips.

4. Process according to Claim 1, **characterized in that** the local heating of the structuring surface of the forming tool takes place by inductive heating.

5. Process according to Claim 1, **characterized in that** the local heating of the structuring surface of the forming tool takes place by electrical resistance heating.

6. Process according to one of Claims 1 to 5, **characterized in that** the structuring surface of the forming tool is heated to a temperature which is greater than Tg and less than Tk, where Tg is the transformation temperature of the glass which is to be structured and Tk is the temperature at which a tool would adhere to the glass.

7. Process according to one of Claims 1 to 6, **characterized in that** the flat glass is preheated by means of suitable heat-generating sources to a temperature T which lies 50 K to 200 K below Tg.

8. Process according to one of Claims 1 to 7, **characterized in that**, during the heating of the structuring surface, the interior heating of the forming tool is minimized by internal cooling of the forming tool and by a low thermal conductivity of the material of the forming tool.

9. Process according to one of Claims 1 to 8, **characterized in that** the forming tool is continuously rolled over the glass surface which is to be structured.

10. Process according to one of Claims 1 to 9, **characterized in that** the hot-forming is carried out using a forming tool which is formed from a base tool and a forming medium which is releasably attached to the base tool and has the structuring surface.

11. Process according to Claims 9 and 10, **characterized in that** the forming medium, while the forming tool is rolling over the glass surface which is to be structured, is unwound from the base tool, pressed into the glass and left there during the cooling phase.

12. Apparatus for carrying out the process for the hot-forming of precision structures in flat glass (3) according to Claim 1 or one of the following claims, having a heated forming tool (1) with a structuring surface, which can be pressed onto one side of the flat glass (3), **characterized in that** the forming tool (1) is assigned at least one external heat-generating source (5), by means of which, shortly before and/or during contact between the forming tool (1) and the glass surface, its structuring surface can be locally heated from the outside, down to a surface depth which is predetermined by the depth of the structures, to a temperature which is such that, on contact with the glass, melting which forms the structures takes place.

13. Apparatus according to Claim 12, **characterized in that** the heat-generating source (5) is a radiation source.

14. Apparatus according to Claim 13, **characterized in that** the radiation source is a laser (5).

15. Apparatus according to Claim 14, **characterized in that** the laser (5) is formed by an array of laser diodes.

16. Apparatus according to Claim 14 or 15, **characterized in that** the laser radiation source (5) is arranged on that side of the flat glass (3) which is remote from the forming tool (1) and has a wavelength which is transmitted through glass.

17. Apparatus according to one of Claims 12 to 16, **characterized in that** the forming tool comprises a base tool (6) and a separate forming medium (7, 7a) arranged thereon.

18. Apparatus according to Claim 17, **characterized in that** the base tool (6) consists of a material of low thermal conductivity, and the forming medium (7, 7a) consists of a material of high thermal conductivity.

19. Apparatus according to Claim 18, **characterized in that** the base tool (6) consists of ceramic, which preferably has a low thermal expansion.

20. Apparatus according to Claim 18 or 19, **characterized in that** the forming medium (7) is formed by a structured sheet-metal part with low adherence to glass.

21. Apparatus according to Claim 20, **characterized in that** the structured sheet-metal part is releasably attached to the base tool (6).

22. Apparatus according to Claim 21, **characterized in that** the structured sheet-metal part is attached to the base tool (6) in such a manner that it can be unwound therefrom.

23. Apparatus according to one of Claims 17 to 22, **characterized in that** the base tool (6) is a roller.

24. Apparatus according to one of Claims 17 to 23, **characterized in that** the base tool (6) has a structure (7c) for securing the forming medium (7) on the base tool (6).

25. Apparatus according to Claim 23, **characterized in that** the forming medium (7) comprises a strip material (7a) which has been wound around the base tool (6), which is designed as a roller.

26. Apparatus according to Claim 25, **characterized in that** the roller has a guiding structure for the strip material.

27. Apparatus according to Claim 26, **characterized in that** the guiding structure is formed by helically arranged webs.

28. Apparatus according to Claim 26, **characterized in that** the guiding structure is formed by rings which run circumferentially and coaxially with respect to the roller axis.

29. Apparatus according to one of Claims 25, 26 or 28, **characterized in that** a second auxiliary roller (11) is arranged axially parallel with respect to the base tool (6), at a distance from the roller which serves as the base tool (6), and the strip material (7a), the windings of which on the rollers are held at a distance from one another by the guiding structure, can be unwound over the two rollers (6, 11), with the strip material being supplied and removed continuously.

30. Apparatus according to Claim 29, **characterized in that** the roller which serves as the base tool (6) is assigned at least one device for supplying the strip material, and the auxiliary roller (11) is assigned at least one device for removing the strip material (7a).

31. Apparatus according to Claim 29 or 30, **characterized in that** an additional tensioning roller (12) is provided for tensioning the strip material (7a) which is running around the base roller (6) and the auxiliary roller(11).

32. Apparatus according to one of Claims 12 to 31, **characterized in that** the raised structure parts of the structuring surface (2) of the forming tool (1) have a predetermined conicity for improving release from the shaped glass structure.

## Revendications

1. Procédé de formage à chaud de structures de précision dans du verre plat, dans lequel un outil de formage chauffé ayant une surface structurante est pressé dans une face du verre plat dans le matériau de verre, **caractérisé en ce que** l'outil de formage est chauffé, seulement peu de temps avant et/ou pendant la mise en contact avec la surface de verre, de l'extérieur, localement, sur la surface structurante jusqu'à une profondeur en surface prédéterminée par la profondeur des structures à une température telle que, lors du contact avec le verre, il se produise une fusion formant les structures.

2. Procédé selon la revendication 1, **caractérisé en ce qu'**un rayon laser est dirigé à travers le verre plat sur la surface structurante pour échauffer localement la surface structurante de l'outil de formage.

3. Procédé selon la revendication 2, **caractérisé en ce que** le chauffage par rayon laser est assisté en outre par d'autres sources de chaleur appropriées, par exemple des rampes de flamme.

4. Procédé selon la revendication 1, **caractérisé en ce que** le chauffage local de la surface structurante de l'outil de formage s'effectue par chauffage par induction.

5. Procédé selon la revendication 1, **caractérisé en ce que** le chauffage local de la surface structurante de l'outil de formage se fait par chauffage par résistance électrique.

6. Procédé selon l'une quelconque des revendications 1 à 5, **caractérisé en ce que** la surface structurante de l'outil de formage est chauffée à une température, qui est plus grande que Tg et plus petite que Tk, Tg étant la température de transformation du verre à structurer et Tk la température à laquelle un outil collerait au verre.

7. Procédé selon l'une quelconque des revendications 1 à 6, **caractérisé en ce que** le verre plat est préchauffé au moyen de sources génératrices de chaleur appropriées à une température T qui se situe à 50 K jusqu'à 200 K en dessous de Tg.

8. Procédé selon l'une quelconque des revendications 1 à 7, **caractérisé en ce que**, lors du chauffage de la surface structurante, son chauffage interne est minimisé par un refroidissement interne de l'outil de formage et par une faible conductibilité thermique du matériau de l'outil de formage.

9. Procédé selon l'une quelconque des revendications 1 à 8, **caractérisé en ce que** l'outil de formage est déroulé en continu sur la surface de verre à structurer.

10. Procédé selon l'une quelconque des revendications 1 à 9, **caractérisé en ce que** le formage à chaud est réalisé par un outil de formage qui est formé d'un outil de base et d'un milieu de formage qui y est appliqué de manière amovible avec la surface structurante.

11. Procédé selon les revendications 9 et 10, **caractérisé en ce que** le milieu de formage est déroulé, au cours du déroulement de l'outil de formage, sur la surface de verre à structurer par l'outil de base, pressé dans le verre et y est laissé au cours de la phase de refroidissement.

12. Dispositif pour la réalisation du procédé de formage à chaud de structures de précision dans du verre plat (3) selon la revendication 1 ou selon l'une quelconque des suivantes, comprenant un outil de formage (1) chauffé ayant une surface structurante, qui peut être pressée sur une face du verre plat (3), **caractérisé en ce que**, à l'outil de formage (1) est affectée au moins une source génératrice de chaleur externe (5) au moyen de laquelle, peu de temps avant et/ou pendant la mise en contact de l'outil de formage (1) avec la surface de verre, sa surface structurante peut être chauffée de l'extérieur localement jusqu'à une profondeur en surface prédéterminée par la profondeur des structures, à une température telle que, lors du contact avec le verre, il se produise une fusion formant les structures.

13. Dispositif selon la revendication 12, **caractérisé en ce que** la source génératrice de chaleur (5) est une source de rayonnement.

14. Dispositif selon la revendication 13, **caractérisé en ce que** la source de rayonnement est un laser (5).

15. Dispositif selon la revendication 14, **caractérisé en ce que** le laser (5) est formé d'une rangée de diodes laser.

16. Dispositif selon la revendication 14 ou 15, **caractérisé en ce que** la source de rayonnement laser (5) est disposée sur la face du verre plat (3) opposée à l'outil de formage (1) et possède une longueur d'onde transmissible pour le verre.

17. Dispositif selon l'une quelconque des revendications 12 à 16, **caractérisé en ce que** l'outil de formage (1) est constitué d'un outil de base (6) et d'un milieu de formage séparé (7, 7a) disposé sur celui-ci.

18. Dispositif selon la revendication 17, **caractérisé en ce que** l'outil de base (6) est constitué d'un matériau de faible conductibilité thermique et le milieu de formage (7, 7a) est constitué d'un matériau de haute conductibilité thermique.

19. Dispositif selon la revendication 18, **caractérisé en ce que** l'outil de base (6) est constitué de céramique, qui possède de préférence une faible dilatation thermique.

20. Dispositif selon la revendication 18 ou 19, **caractérisé en ce que** le milieu de formage (7) est formé par une pièce de tôle structurée avec une faible tendance au collage pour le verre.

21. Dispositif selon la revendication 20, **caractérisé en ce que** la pièce de tôle structurée est fixée à l'outil de base (6) de manière amovible.

22. Dispositif selon la revendication 21, **caractérisé en ce que** la pièce de tôle structurée est fixée sur l'outil de base (6) de façon à pouvoir s'en dérouler.

23. Dispositif selon l'une quelconque des revendications 17 à 22, **caractérisé en ce que** l'outil de base (6) est un rouleau.

24. Dispositif selon l'une quelconque des revendications 17 à 23, **caractérisé en ce que** l'outil de base (6) présente une structure (7c) pour fixer le milieu de formage (7) sur l'outil de base (6).

25. Dispositif selon la revendication 23, **caractérisé en ce que** le milieu de formage (7) est constitué d'un matériau sous forme de bande (7a) enroulé autour de l'outil de base (6) conformé en rouleau.

26. Dispositif selon la revendication 25, **caractérisé en ce que** le rouleau présente une structure de guidage pour le matériau sous forme de bande.

27. Dispositif selon la revendication 26, **caractérisé en ce que** la structure de guidage est formée par des entretoises disposées en forme hélicoïdale.

28. Dispositif selon la revendication 26, **caractérisé en ce que** la structure de guidage est formée par des anneaux s'étendant sur la périphérie coaxialement par rapport à l'axe du rouleau.

29. Dispositif selon l'une quelconque des revendications 25, 26 ou 28, **caractérisé en ce que**, dans l'outil de formage (1), à distance du rouleau servant d'outil de base (6), est disposé un deuxième rouleau auxiliaire (11) dont l'axe est parallèle à celui de l'outil de base (6), et **en ce que** le matériau sous forme de bande (7a), dont les enroulements sur les rouleaux sont maintenus par la structure de guidage à distance l'un de l'autre, peut être déroulé via les deux rouleaux (6, 11) avec amenée et évacuation en continu du matériau sous forme de bande.

30. Dispositif selon la revendication 29, **caractérisé en ce qu'**au rouleau servant d'outil de base (6) est affecté au moins un dispositif d'amenée pour le matériau sous forme de bande et **en ce qu'**au rouleau auxiliaire (11) est affecté au moins un dispositif d'évacuation pour le matériau sous forme de bande (7a).

31. Dispositif selon la revendication 29 ou 30, **caractérisé en ce qu'**un rouleau tendeur supplémentaire (12) est prévu pour tendre le matériau sous forme de bande (7a) circulant sur le rouleau de base (6) et le rouleau auxiliaire (11).

32. Dispositif selon l'une quelconque des revendications 12 à 31, **caractérisé en ce que** les parties structurelles saillantes de la surface structurante (2) de l'outil de formage (1) présentent une conicité prédéterminée pour mieux se détacher de la structure de verre façonnée.
